# EUROPEAN PATENT APPLICATION

(11) **EP 3 490 264 A1**
(43) Date of publication of application: **29.05.2019**
(21) Application number: 17203488.6
(22) Date of filing: 24.11.2017
(51) Int. Cl.: H04N 21/442, H04N 21/475

(54) **METHOD FOR CONTROLLING ACCESS OF MULTIPLE MULTIMEDIA DEVICES BASED ON A COMMON TIME CONTINGENT**

(71) Applicant: Vestel Elektronik Sanayi ve Ticaret A.S., 45030 Manisa (TR)
(72) Inventor: SARIARSLAN, Muhammet Kürsat, 45030 Manisa (TR)
(74) Representative: Ascherl, Andreas

(57) **Abstract**

The present invention refers to a method for controlling usage of multiple multimedia devices, in particularly for restricting access to programs and/or applications and/or channels accessible via the multimedia devices. Said method preferably comprises at least the steps of defining programs and/or applications and/or channels that can be accessed for a predefined total time in a predefined period of time by a specific person on a defined number of multimedia devices, identifying the specific person by means of the multimedia device, detecting the time the specific person accesses the defined programs and/or applications and/or channels, sharing the detected time and the defined programs and/or applications and/or channels with the defined number of multimedia devices, restricting access to the defined program and/or application in case the detected time matches the predefined overall time.

## Description

The present invention refers according to claim 1 to a method for controlling access of multiple multimedia devices, in particularly based on a common time contingent of a specific user, in particularly a child, and according to claim 14 to a computer program product for executing said method.

### Background of the invention

For children's health, they should interact with devices such as TVs or mobile phones and tablets only for a certain amount of time during the day. But parents cannot always control this time. There is a general discussion between the child and the parent when the devices are closed or taken out of their hands.

### Object of the invention

It is the object of the invention to provide a method that provides control of multimedia consumption of a child.

### Description of the invention

The before mentioned object is solved by a method for controlling usage of multiple multimedia devices, in particularly for restricting access to programs and/or applications and/or channels accessible via the multimedia devices, in particularly based on a common time contingent, according to claim 1. The inventive method preferably comprises at least the steps: defining programs and/or applications and/or channels that can be accessed for a predefined total time in a predefined period of time, in particularly one day or one week, by a specific person on a defined number of multimedia devices, identifying the specific person by means of the multimedia device, detecting the time respectively how long the specific person accesses the defined programs and/or applications and/or channels, sharing the detected time and the defined programs and/or applications and/or channels with the defined number of multimedia devices, restricting access to the defined program and/or application in case the detected time matches the predefined overall time or in case the selected or started program or channel or application does not match a predefined rating.

The invention is solving the before mentioned problem without a need of arguing with children. Furthermore, since the defined restrictions are applied to multiple different multimedia devices, like smart watch, smart phone, tablet pc, TV, ebook reader, etc. an adult only need to set the restriction/s for one device and the other devices apply the same restriction/s.

Multimedia preferably describes in the sense of the present invention e.g. games, music, calls, email, images, videos and/or chats.

Further preferred embodiments are subject-matter of the following specification passages and/or the dependent claims.

Programs and/or applications and/or channels that can be accessed for the defined total time are according to a further preferred embodiment of the present invention linked to at least one identification feature, wherein the identification feature is a password, a code, a finger print and/or the shape of one or both eyes of the specific person and/or the shape of a face region of the specific person. This embodiment is beneficial since a child can be easily identified by its identification feature. Thus, the restriction, time limits and/or preferences with respect to the specific person, in particularly child, are registered and determine the maximum field of usage of the multimedia devices.

According to a further preferred embodiment of the present invention a total time for individual applications and/or programs and/or channels is set. The total time is preferably set for individual days or groups of day or for all days. It is preferably possible to set different total times per day for weekend days or days in the week or holidays. A push notification is also possible, wherein the total time can be extended based on a request. Thus, an application preferably provides the function to sent information about a currently accesses channel or game or program or a future channel or game or program to an unit executing a master or supervisor means. The master or supervisor means can respond to the request by allowing or denying the access or by extending the time limit. This embodiment is beneficial since exceptions from the set restrictions are possible and since the person in charge can react without a need of physical presence.

An age of the specific person is registered according to a further preferred embodiment of the present invention and content which is rated as unappropriated for the age of the identified person is preferably blocked or blacked out or obliterated. The rating of the content is preferably provided via the internet or teletext. This embodiment is beneficial since the person in charge cannot check if the available programs or channels or games are suitable for a child of the respective age.

The age of the specific person is preferably updated every year automatically. This embodiment is beneficial since the person in charge does not have to modify the settings.

The multimedia devices are according to a further embodiment of the present invention connected via a network, in particularly a wireless network, like GSM and/or WLAN and/or Bluetooth, and/or a wire network, like LAN, and the defined overall time and the detected time and the defined programs and/or applications and/or channels and/or identification features of the specific person and/or age of the specific person are shared with the defined number of multimedia devices via the network. This embodiment is beneficial since the necessary information respectively the necessary data is shared with all multimedia devices. A multimedia device is preferably only allowed to output multimedia content in case the multimedia device is online respectively connected to the respective network of multimedia devices or was online respectively connected to the respective network of multimedia devices within a predetermined time. This feature is beneficial since it is verified which type of multimedia and/or how long the specific person, in particularly child, is allowed to access the multimedia device. Furthermore, in case the child accesses a channel or program or application, in particularly a game, a start flag is set representing the start of multimedia access. After terminating the access, a further end flag is preferably set representing the end of the multimedia access. In case the end flag is not registered access to a further multimedia device or further multimedia access is preferably denied. This embodiment is beneficial since the child cannot extend the overall time by turning off the data connection between the multimedia devices.

The multimedia devices are according to a further preferred embodiment of the present invention executing the same application, wherein the application is preferably cloud based and routes the defined overall time and the detected time and the defined programs and/or applications and/or channels and/or identification features of the specific person and/or age of the specific person to the predefined multimedia devices. This embodiment is beneficial since the individual multimedia devices can be used outside a local network. E.g., the child can use a smartphone in school and a TV and console at home but the overall time and/or restrictions apply to all devices.

Deactivating of the application respectively of the set restrictions requires according to a further preferred embodiment of the present invention a master identification feature and/or wherein deactivation of the application causes a notification, wherein the notification is transmitted to a notification means, wherein access of the notification means requires the master identification feature. This embodiment is beneficial since the adult respectively person in charge needs to modify the restrictions and/or overall time.

In case multiple specific persons are registered an eye and/or face detection is carried out according to a further preferred embodiment of the present invention during access to the defined programs and/or applications and/or channels is permitted. This embodiment is beneficial since it can be detected if one child uses the device alone or if multiple children are using the device together.

In case multiple specific persons are detected it is preferably determined if each person is allowed to access the programs and/or applications and/or channels, in case at least one person is not allowed to access the programs and/or applications and/or channels access is blocked. This embodiment is beneficial since accessing of multimedia content by the younger child is prevented even in case an older child accesses such content.

In case multiple specific persons are detected it is preferably determined if each person is allowed to access the programs and/or applications and/or channels. In case all persons are allowed to access the programs and/or applications and/or channels the time each of the specific persons accesses the programs and/or applications and/or channels is preferably determined. This embodiment is beneficial since siblings, e.g. twins, cannot add the individual overall time by accessing the program or channel or game one after the other. The determined time of access is cumulated with respect to each detected child respectively specific person until the total time of one of said children respectively specific persons is reached.

In case the camera cannot detect at least or exactly one specific person or at least or exactly two specific persons or at least all specific persons, in particularly children, properly access of the programs and/or applications and/or channels is preferably restricted. This embodiment is beneficial since a child not allowed to access the content can be prevented from doing so.

Applications comprise according to a further preferred embodiment of the present invention games and/or messenger services and/or video and/or streaming services.

The before mentioned object is also solved by a computer program product for executing of one of the before mentioned methods.

Further benefits, goals and features of the present invention will be described by the following specification of the attached figures, in which exemplarily components of the invention are illustrated. Components of the devices, units and methods according to the invention, which match at least essentially with respect to their function can be marked with the same reference sign, wherein such components do not have to be marked or described multiple times with respect to said figures. In the following the invention is just exemplarily described with respect to the attached figures.

### Brief description of the drawings

- Fig. 1: shows an example of a first preferred process respectively method according to the present invention; and
- Fig. 2: shows an example of a second preferred process respectively method according to the present invention.

### Detailed description of the drawings

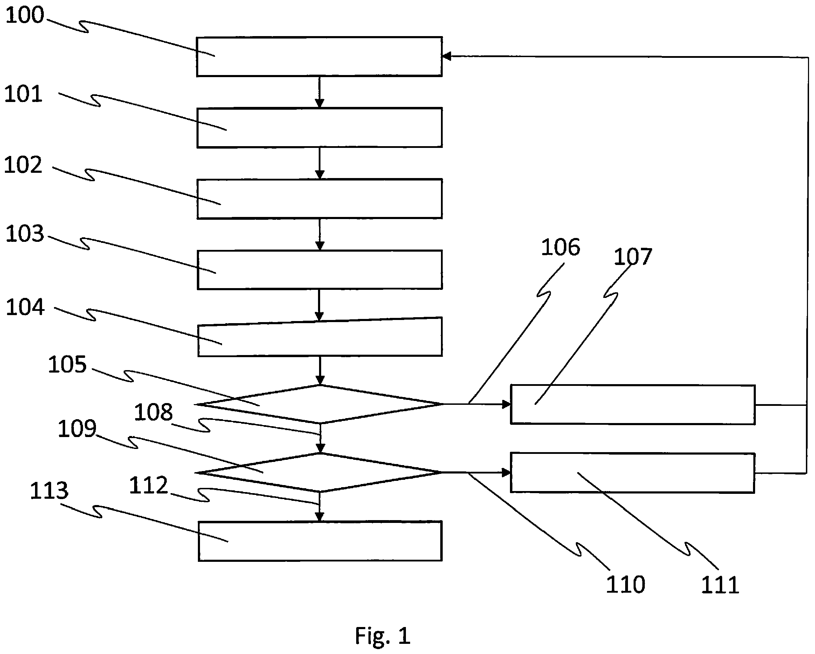

Fig. 1 shows an example of a preferred process. According to the preferred process a channel/program/application is started or changed by a child (step 100). The start or change of the channel/program/application is delayed (step 101) until the age limitations with respect to the selected channel/program/application are checked (step 102). An identification is requested, in particularly via a screen of the respective device (step 103). The Identification can be carried out by inserting a password and/or by performing a finger print analysis and/or by performing an eye and/or face detection by means of a camera unit (step 104). The camera unit can be part of the multimedia device and the processing of image data representing a finger print and/or eye and/or face of the child is preferably carried out by a respective algorithm. The identification feature, in particularly the password, is compared with recorded data, in particular passwords (step 105). It is hereby checked if the identification is sufficient to enable access to the channel/program/application. In case access is denied (step 106) access to the channel/program/application is not enabled respectively is prevented (step 107). In case the identification is correct (step 108) it is checked if the profile associated with the identification, in particularly password, has sufficient time to access the channel/program/application (step 109). If no (step 110) access to the channel/program/application is not enabled respectively is prevented (step 111). If yes (step 112) the selected or started channel/program/application is enabled (step 113). Starting respectively accessing of the selected channel/program/application also preferably triggers recording of the watching time and/or the accessed content. The watching time information and/or the accessed content is/are preferably provided to a profile of the child and/or a profile of a person in charge, in particular a master profile. The shared information preferably further comprises the password. The shared information is preferably shared with all multimedia devices, in particular the multimedia devices linked to a profile of the respective person respectively child.

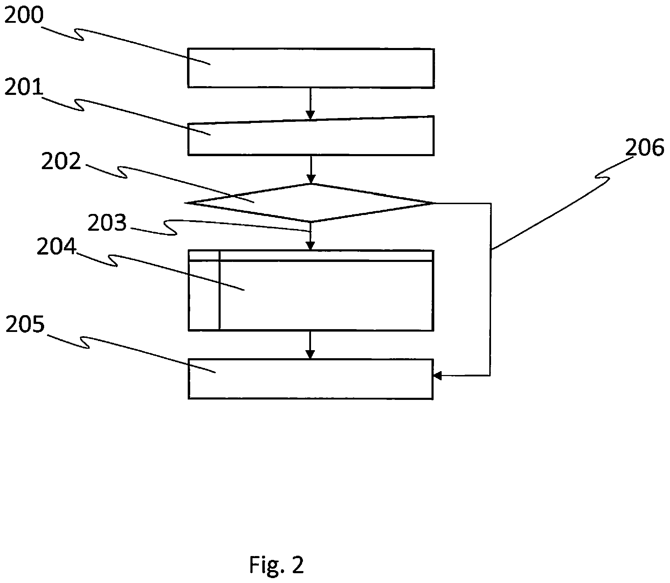

Fig. 2 shows an example of an inventive process that might be applied in case a new child is registered or in case the restrictions with respect to multimedia access of a specific child are modified. This process can be e.g. performed before the process of fig. 1.

According to a first step (200) inputting of information with respect to a user, in particular a child, is requested. The persons age information is inserted in step 201. It is further asked if limitations respectively restrictions, in particularly with respect to content and/or time and/or device/s, should be created (step 202). If yes (203) current date and/or persons age and/or persons name and/or time limits and/or content limitations and/or device limitations are recorded, in particularly with respect to a specific person and/or specific identification data, in particularly a password and/or eye and/or face detection (step 204). The recorded information, in particular current date and/or persons age and/or persons name and/or time limits and/or content limitations and/or device limitations, are transmitted to other multimedia devices and/or a server unit, in particularly a cloud-based server. The transmitting of said data is preferably carried out via a wireless communication path respectively method (step 205). In case the answer to step 202 is no (206) step 205 is directly selected.

Thus, the present invention comprises the step of establishing a timer for monitored programs. When this timer expires, it will not allow the program / application to be accessed by changing / closing the program or removing it from the list for a certain time, or dimming the screen and turning off the sound. In order to be able to perform these operations, when the first installations are made to devices such as TV, mobile phone or tablet, age information of the people, in particularly children, in the house is asked and the information of the people living at home is taken. The system then asks the user whether or not to set a usage limit for the particular type of TV broadcasts and / or programs. If the user enters a limit, it is saved in this system. The system starts recording the duration of the TV broadcasts according to the age group of the people at home and preferably shares this information with other multimedia devices. By this way, the timer running for the limit operation is common to all devices. In addition, the system measures time to calculate for changes in the age of the people at home. The system automatically removes the limit if there is no need to do so after one or two years.

Application Example: The user enters the information that the child is at home at the age of 5 and 16 at the first installation. Then the user replies to the question of the system which is "would you like to add time limit?" If the user enters the limit of 1 hour for 5 years and 3 hours for 16 years, this information will be sent wirelessly from that device to other devices in the house or to a cloud-based service where all devices are linked to. By this way all devices become synchronous. The system checks the age groups of the opened programs after installation and if the appropriate programs are activated for 5 and 16 years, the timer starts to work. For example, if there is a cartoon on the TV, the timer works. If a game or video is opened on a mobile phone or tablet and is suitable for age 5 or 16, the timer will run again. The latest status information of the timer is sent to other devices. In this way, the total usage of all devices is determined and all devices block programs or channels suitable for 5 or 16 years age. For example, if a 5-year-old child watches 30 minutes on a TV, then a few hours later on his cell phone, and again 30 minutes, the system starts the limiter on the appropriate program and applications for a child aged 5 years.

Wait until user reaches reset time. For example, if there is a limit of 1 hour per day, then the limit will be removed from the system after waiting until the next day.

The system does not make any restrictions on programs that will be watched for 5 and 16 years after two years. The user is asked whether they want to make a limit again.

The system sets a timer for each child of different ages in which the system is restricted and the system performs the limiter for each age separately.

According to this application the age of different children is detected respectively registered. Because if older child watches the program which is also suitable for young one then time for younger child can be consumed by older one.

In case of watching TV with parents and children, parents are already in the situation, so there is no problem watching TV. But the problem usually comes out when children use their own devices. For example, when the mother or father is busy, the child is hanging around with one of the devices. In this case, the child remains in contact with the device unnecessarily, unnoticed by the parents.

The system respectively inventive method distinguishes the user in order to work correctly. At this point, it is required to enter the user's own information when the program / channel is opened. The code / password required for the young child will already be entered by the family. In this case, the device will start timer for the small child according to the entered code. If the user is a young person who can enter his or her own code, for example a 13-year-old child then he / she is asked to enter his / her own code. The family will give him/her the code to use. When activating the device using the older child's code, the counter is activated for him/her. Adults override the period by entering their own code.

The age group of the selected program is checked together with the information of the user. If the age group is not suitable for the user then the program is not displayed. In this way, the child cannot watch the programs that are not suitable for him.

Along with this, if an older child watches programs suitable for younger ages this preferably does not consume the right of a small child at home. Because timer is working for the older child with his/her passcode. To be able to do this, the parents must install the device for this application. During the installation, the child's age and code / password information is also entered.

Therefore, the present invention is solved by a method for controlling usage of multiple multimedia devices, in particularly for restricting access to programs and/or applications and/or channels accessible via the multimedia devices. According to this method individual steps described before can be combined multiple manners. Said method preferably comprises at least the steps of defining programs and/or applications and/or channels that can be accessed for a predefined total time in a predefined period of time by a specific person on a defined number of multimedia devices, identifying the specific person by means of the multimedia device, detecting the time the specific person accesses the defined programs and/or applications and/or channels, sharing the detected time and the defined programs and/or applications and/or channels with the defined number of multimedia devices, restricting access to the defined program and/or application in case the detected time matches the predefined overall time.

### List of reference numbers

- 100: inserting a command to start or change of channel/program/application
- 101: do not start channel/program/application
- 102: check limitations, in particular age, and/or restrictions
- 103: ask for identification, in particularly ask for password
- 104: carry out identification, in particular by means of entering password or eye or face detection
- 105: compare identification with recorded identification, in particular recorded password
- 106: identification failed
- 107: access to channel/program/application is not enabled
- 108: identification passed
- 109: check if time associated with the identification, in particularly password, is enough for accessing channel/program/application
- 110: check failed
- 111: access to channel/program/application is denied
- 112: check passed
- 113: access to channel/program/application enabled, watching time is tracked, password and time information are shared with other devices
- 200: ask person information to user
- 201: insert person age information
- 202: ask if limitations or restrictions should be defined
- 203: yes - proceed with 204
- 204: record specific information, in particularly persons age, time limits and/or current date
- 205: transmit of recorded information, in particularly as data, to other multimedia devices and/or a cloud-based server
- 206: no - proceed with 205

## Claims

1. Method for controlling usage of multiple multimedia devices, in particularly for restricting access to programs and/or applications and/or channels accessible via the multimedia devices,
at least comprising the steps:
defining programs and/or applications and/or channels (204) that can be accessed for a predefined total time in a predefined period of time by a specific person on a defined number of multimedia devices,
identifying the specific person by means of the multimedia device (104),
detecting the time the specific person accesses the defined programs and/or applications and/or channels,
and
sharing the detected time and the defined programs and/or applications and/or channels with the defined number of multimedia devices (113),
restricting access to the defined program and/or application in case the detected time matches the predefined overall time.

2. Method according to claim 1,
**characterized in that**,
programs and/or applications and/or channels that can be accessed for the defined total time are linked to at least one identification feature (103),
wherein the identification feature is a password, a code, a finger print and/or the shape of one or both eyes of the specific person and/or the shape of a face region of the specific person.

3. Method according to claims 1 or 2,
**characterized in that**,
a total time for individual applications and/or programs and/or channels is set (202).

4. Method according to any of the preceding claims,
**characterized in that**,
an age of the specific person is registered (201) and content which is rated as unappropriated for the age of the identified person is blocked, wherein the rating of the content is provided via the internet or teletext.

5. Method according to claim 4,
**characterized in that**,
the age of the specific person is updated every year automatically.

6. Method according to any of the preceding claims,
**characterized in that**
the multimedia devices are connected via a network, in particularly GSM and/or WLAN, and the defined overall time and the detected time and the defined programs and/or applications and/or channels and/or identification features of the specific person and/or age of the specific person are shared with the defined number of multimedia devices via the network.

7. Method according to any of the preceding claims,
**characterized in that**
The multimedia devices are executing the same application, wherein the application is preferably cloud based and routes the defined overall time and the detected time and the defined programs and/or applications and/or channels and/or identification features of the specific person and/or age of the specific person to the predefined multimedia devices.

8. Method according to any of the preceding claims,
**characterized in that**
deactivating of the application requires a master identification feature and/or wherein deactivation of the application causes a notification, wherein the notification is transmitted to an notification means, wherein access of the notification means requires the master identification feature.

9. Method according to any of the preceding claims,
**characterized in that**
in case multiple specific persons are registered an eye and/or face detection is carried out during access to the defined programs and/or applications and/or channels is permitted.

10. Method according to claim 9,
**characterized in that**,
in case multiple specific persons are detected it is determined if each person is allowed to access the programs and/or applications and/or channels, in case at least one person is not allowed to access the programs and/or applications and/or channels access is blocked.

11. Method according to claim 9,
**characterized in that**,
in case multiple specific persons are detected it is determined if each person is allowed to access the programs and/or applications and/or channels, in case all persons are allowed to access the programs and/or applications and/or channels the time each of the specific persons accesses the programs and/or applications and/or channels is determined,
wherein the determined time is cumulated until the total time is reached.

12. Method according to claims 9 to 11,
**characterized in that**,
in case the camera cannot detect at least one specific person properly access of the programs and/or applications and/or channels is restricted.

13. Method according to any of the preceding claims,
characterize in that
defined applications comprise games and/or messenger services and/or video and/or streaming services.

14. Computer program product for executing of one of the before mentioned methods.
